# EUROPEAN PATENT APPLICATION

(11) **EP 1 873 032 A1**
(43) Date of publication of application: **02.01.2008**
(21) Application number: 07109701.8
(22) Date of filing: 06.06.2007
(51) Int. Cl.: B60W 10/10, B60W 10/06, F16H 59/02, F16H 61/28

(54) **Automated mechanical transmission having wireless interface**

(30) Priority: 27.06.2006 US 475508
(71) Applicant: ZF Friedrichshafen AG, 88038 Friedrichshafen (DE)
(72) Inventor: Klimek, Beth, 88074 Meckenbeuren (DE); Sayman, Anthony Robert, 88074 Meckenbeuren (DE); DeVore, James Henry, Metamora, IL 1041 (US)

(57) **Abstract**

An automated mechanical transmission (AMT) includes a conventional multispeed (gear ratio) mechanical transmission, a transducer/actuator assembly, a microprocessor controller which drives the actuator assembly and includes a plurality of inputs, and a plurality of sensors providing information to the controller inputs. A wireless interface is disposed between the controller and the actuator assembly. The wireless connection may utilize any of several technologies and protocols such as Bluetooth or WiFi. Such wireless interfaces or connections may also be utilized between various sensors or input devices and indicators or readouts and the controller as well as between any other components in the system.

## Description

### TECHNICAL FIELD

The invention relates generally to a vehicle transmission assembly having at least one wireless interface between the transmission and a controller and more specifically to an automated mechanical transmission assembly having a bi-directional wireless interface between the transmission and a controller.

### BACKGROUND

Due to their increased sophistication and operation capabilities such as smoothness of operation and fuel efficiency, automated mechanical transmissions (AMT's) continue to increase their market penetration. Such systems generally comprise a relatively conventional multi-speed mechanical transmission having a mechanical transducer or actuator assembly which receives signals from a controller or microprocessor and commands appropriate mechanical translation of the shift and gear components of the transmission. The controller or microprocessor receives data from a plurality of sensors such as an operator controlled shift device, a throttle position sensor, engine and various shaft speed sensors and other operating and vehicle parameter sensors and, according to various operating algorithms, calculations, look-up tables and the like, determines an appropriate gear ratio and selects or maintains that gear ratio.

The various components such as the sensors, the controller and the transducer/actuator assembly on the transmission are typically all hard wired, i.e., connected by conventional wiring or wiring harnesses In order to facilitate servicing, repair and replacement of the these various components, such hard wiring incorporates multiple conductor connectors at strategic locations on the wiring harnesses to permit removal, for example, of the controller or the transducer/actuator assembly from the vehicle without disturbing the other components and the remaining wiring. Since such components, i.e., the wiring harness and connectors are typically mounted in locations which expose them to ambient road conditions such as rain, ice, snow, ice and snow melting materials such as salt and calcium chloride, traction enhancing materials such as cinders and sand and an extraordinary and constantly changing variety of dust, dirt and airborne contaminants. The service conditions of such components are best described as extreme and deleterious. Experience has proven that such connectors and to a lesser extent, the wiring harnesses themselves are the source of many problems related to the electrical and control systems of an automated mechanical transmission. Such problems are difficult to diagnose and, because they are often intermittent, are difficult to locate.

Recognition of this difficulty has resulted in extraordinary effort toward enhancing the reliability and weatherability of such connectors and wiring and improving and extending their service life. Selection of materials which maintain both their nominal dimensions and resilience over exceedingly wide temperature ranges and materials such as gold which are substantially resistant to corrosion and adverse reactions from exposure to salt and other environmental hazards have been used extensively, While such efforts have improved the reliability of the components of the electrical system and thus the overall reliability of the system, improvements thereto are nonetheless desirable and sought after. The present invention is directed to such an improvement.

### SUMMARY

An automated mechanical transmission (AMT) includes a conventional multi-speed (gear ratio) mechanical transmission, a transducer/actuator assembly, a microprocessor controller which drives the actuator assembly and includes a plurality of inputs, and a plurality of sensors providing information to the controller inputs. A wireless interface is disposed between the controller and the actuator assembly. The wireless connection may utilize any of several technologies and protocols such as Bluetooth or WiFi. Such wireless interfaces or connections may also be utilized between various sensors or input devices and indicators or readouts and the controller as well as between any other components in the system.

Thus it is an object of the present invention to provide an automated mechanical transmission having a radio frequency link between the transmission controller and the transmission actuator assembly.

It is a further object of the present invention to provide an automated mechanical transmission having a radio frequency link between various sensors and input devices and the transmission controller.

It is a further object of the present invention to provide an automated mechanical transmission having a radio frequency link between indicators or readouts and the transmission controller.

It is a still further object of the present invention to provide an automated mechanical transmission having radio frequency data links between various components of the transmission clutch.

It is a still further object of the present invention to provide an automated mechanical transmission having radio frequency links utilizing, for example, Bluetooth or WiFi protocols between components of the automated mechanical transmission.

Further objects and advantages of the present invention will become apparent by reference to the following description of the preferred embodiment and appended drawings wherein like reference numbers refer to the same component, element or feature.

### BRIEF DESCRIPTION OF THE DRAWINGS

Figure 1 is a diagrammatic view of a first embodiment of an automated mechanical transmission utilizing a wireless link between the master transmission controller and the clutch and transmission;

Figure 2 is an enlarged, diagrammatic view of an automated mechanical transmission and shift actuator and sensor assembly incorporating the present invention; and

Figure 3 is a diagrammatic view of a second embodiment of an automated mechanical transmission utilizing, wireless links between various vehicle sensors, input devices, the master clutch, the transmission and the transmission controller.

### DESCRIPTION OF THE PREFERRED EMBODIMENTS

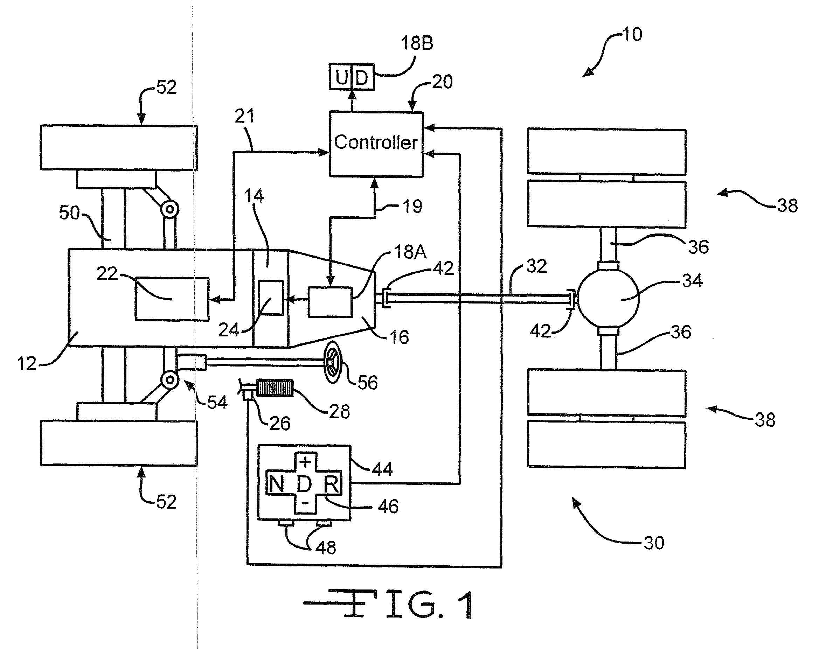

Referring now to Figure 1, a diagrammatic, plan view of a typical truck tractor incorporating a first embodiment of the present invention is illustrated and generally designated by the reference number 10. The first embodiment 10 includes a truck or tractor having a prime mover 12 which may be an internal combustion gas or Diesel engine having an output provided directly to a master friction clutch 14, The master friction clutch 14 selectively and positively engages the output of the prime mover 12 to an input of a multiple speed, gear change transmission 16. The transmission 16 is preferably of the type currently designated as an automated mechanical transmission (AMT) wherein gear or speed ratio changes of a splitter, a main transmission, and a planetary gear assembly, for example, are all achieved by an automated, i.e., electric, hydraulic or pneumatic, shift actuator assembly 18 under the control of a master microprocessor or controller 20. The master microprocessor or controller 20 is preferably coupled by a data and control link 21 to an engine controller 22. The engine controller 22 is an integral component of the prime mover 12 and will typically include a processor or controller which receives data from an engine speed sensor and other sensors or devices and controls, for example, a fuel control or metering device capable of adjusting and terminating flow of fuel to the prime mover 12 and thus its speed. The master friction clutch 14 also includes a master friction clutch operator assembly 24 which controls the engagement and disengagement of the master friction clutch 14. A throttle position sensor 26 senses the position of a vehicle throttle or accelerator pedal 28 and provides real time data regarding the position of the throttle pedal 28 to the engine controller 22, which, in turn, may provide such data to the master controller 20 or to a CAN or body controller system.

The output of the transmission 16 is provided to a rear driveline assembly 30 which includes a rear propshaft 32 which drives a conventional rear differential 34. The rear differential 34 provides drive torque to a pair of rear axles 36 which are in turn coupled to left and right rear tire and wheel assemblies 38 which may be either a dual configuration illustrated or a single left and right tire and wheel assembly. Suitable universal joints 42 may be utilized as necessary with the rear propshaft 32 to accommodate static and dynamic offsets and misalignments thereof. Also disposed in the cab of the truck or tractor is an operator adjustable gear selector lever or assembly 46 having an output which is provided to the master controller 20. The gear selector lever assembly 46 defines a shift pattern 48 through which the vehicle operator may select, for example, whether the master controller 20 will automatically select and shift between available gears of the transmission 16 or defeat or override such automatic selection and manually select a desired gear. A stationary front axle 50 pivotally supports a pair of front tire and wheel assemblies 52 which are controllably pivoted by a steering linkage 54 which is coupled to and positioned by a steering wheel 56.

Whereas in prior art configurations of automated mechanical transmissions, the master controller 20 was hard wired to the shift and actuator assembly 18 and indirectly hard wired to the master friction clutch operator assembly 24 through the shift and actuator assembly 18 or directly hard wired thereto, the present invention replaces such hard wiring with a wireless, i,e., bi-directional radio frequency data link. Accordingly the master controller 20 includes a first radio frequency transceiver, i.e., transmitter and receiver, assembly 60. The first transceiver assembly 60 includes a first transmitter 62 which is provided with electrical power from the master controller 20 as well as all control signals to be transmitted to the shift actuator assembly 18 and the master friction clutch operator 24. The first transceiver assembly 60 also includes a first receiver 64 which receives signals transmitted by a complementary device associated with the master controller 20. The first transmitter 62 and the first receiver 64 share a suitable antenna 66 which facilitates transmission and reception of radio signals to and from complementary second transceiver assembly 70 associated with the shift actuator assembly 18.

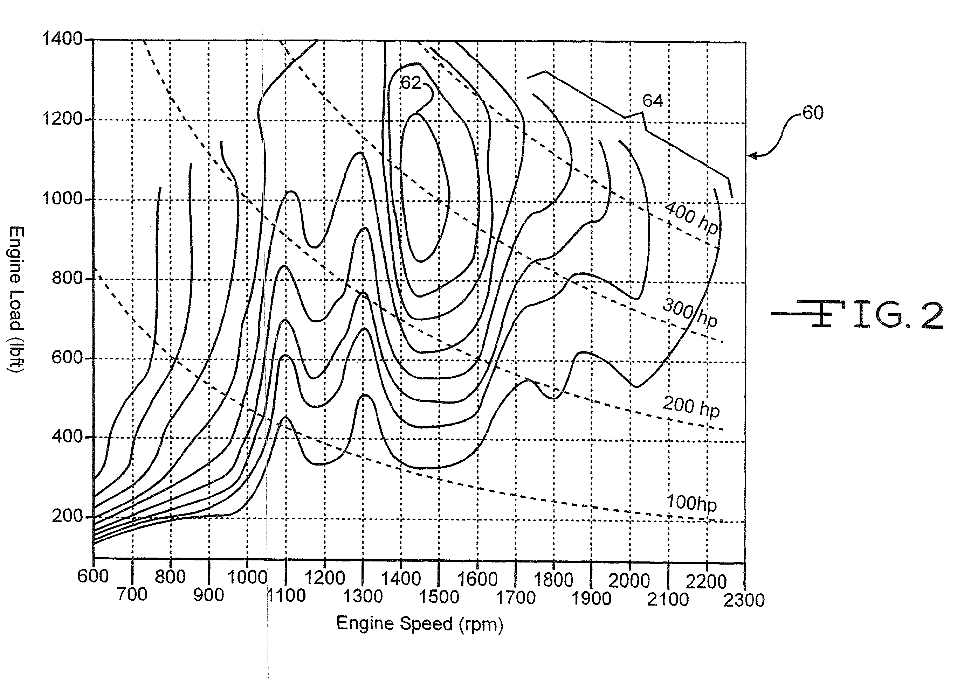

The second transceiver assembly 70 includes a second transmitter 72 which receives data, from, for example, position sensors and linear transducers (illustrated in Figure 2) regarding the current state of the transmission assembly 16 and transmits it to the receiver 64 and a second receiver 74 which receives data signals and information from the first transmitter 62 of the first transceiver assembly 60 associated with the master controller 20 and provides such information and data signals to appropriate actuators and other components of the transmission assembly 16. An antenna 76 is coupled to and shared by the second transmitter 72 and the second receiver 74.

Referring now to Figure 2, a shift and actuator assembly 18 receives commands from the second receiver 74 through a multiple conductor cable 80 and provides such data to a first actuator and shift rail assembly 82 which may be associated with a splitter, i.e., a two-speed gear selection device in the transmission 16, a second actuator and shift rail assembly 84 and a third select actuator and shift rail assembly 86 which both may be associated with a main three or four speed gear box of the transmission 16 and a fourth actuator and shift rail assembly 88 which may be associated with a two-speed planetary gear speed reduction assembly at the rear of the transmission 16. The actuators and shift rail assemblies 82, 84, 86 and 88 all receive signals or commands from the second receiver through the multi-conductor cable 80.

Each of the actuator and shift rail assemblies 82, 84, 86 and 88 also includes a position sensor such as a linear transducer which is connected to the second transmitter 72 by a multiple conductor cable 90. A first linear transducer 92 is associated with the first actuator and shift rail assembly 82 and provides real time data regarding its position to the second transmitter 72. A second linear transducer 94 is associated with the actuator and shift rail assembly 84 and provides real time data regarding the position of the second actuator and shift rail assembly 84 to the second transmitter 72. A third linear transducer 96 provides data to the second transmitter 72 regarding the position of the third actuator and shift rail assembly 86 which rotates the shift rail of the second actuator and shift rail assembly 84. A fourth linear transducer 98 provides real time data to the second transmitter 72 regarding the real time position of the fourth actuator and shift rail assembly 88.

The transmission assembly 16 may include additional sensors. For example, an input shaft speed sensor 100 may provide real time data regarding the rotational speed of the input shaft 102 of the transmission 16 to the second transmitter 72 through the multi-conductor cable 90.

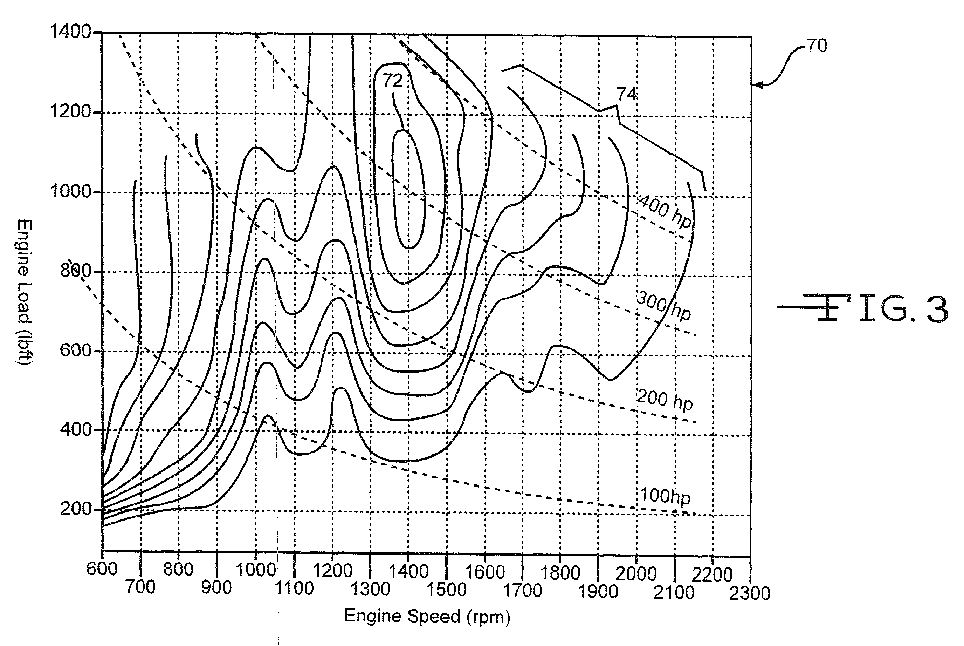

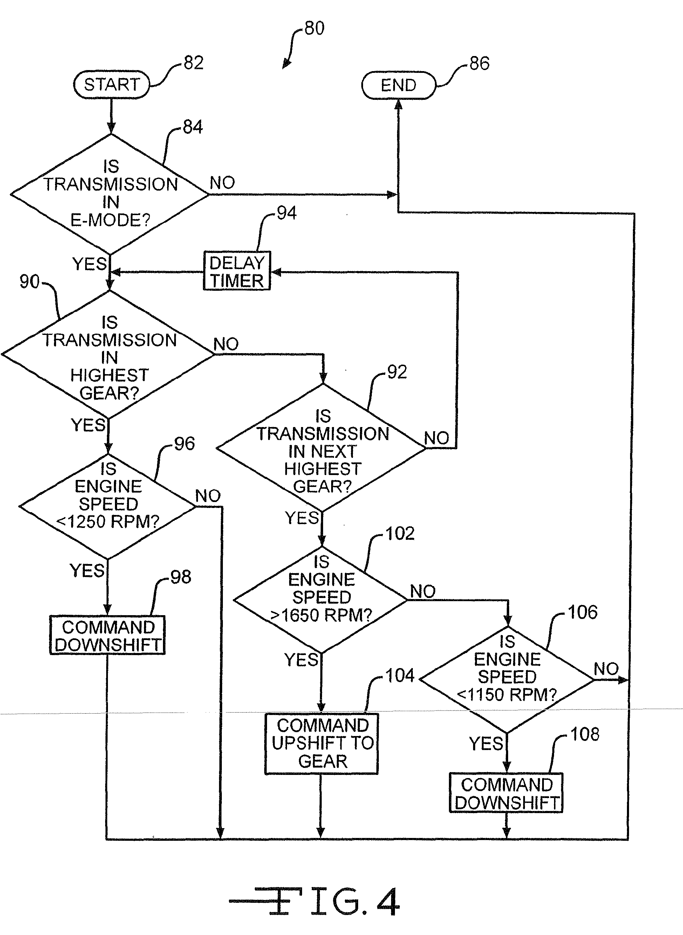

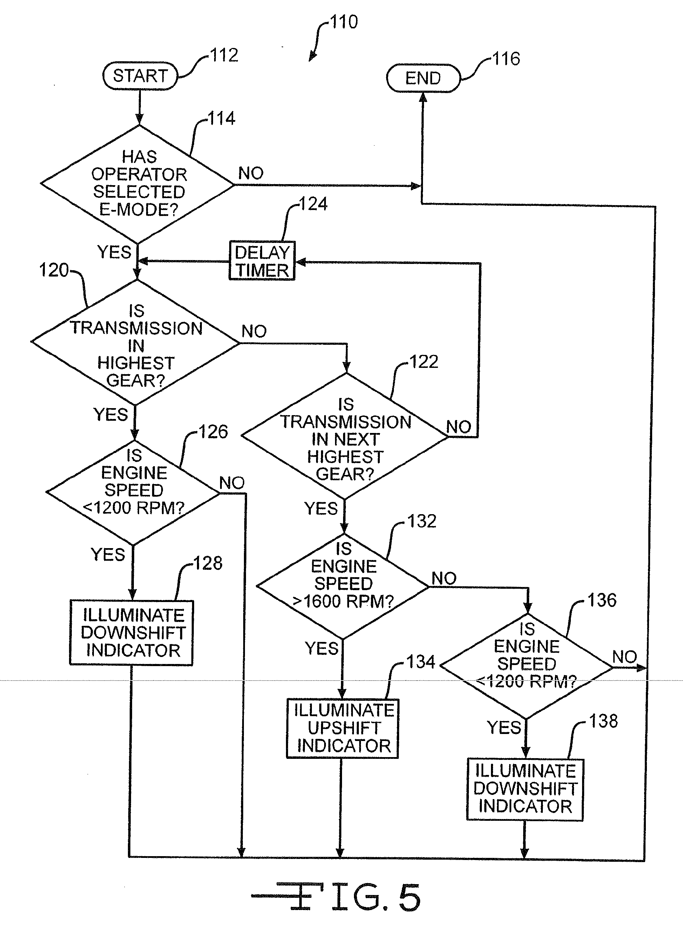

The wireless electronic, i.e., radio frequency link between the first transceiver assembly 60 and the second transceiver assembly 70 may function in accordance with one of many electronic data transmission protocols. Such a system will preferably have a data transmission capability of 1 to 3 Mbps, operate with transmitter power of 5 milliwatts or less and include some type of interference suppression. For example, Bluetooth point-to-point transmission may be utilized. Bluetooth is a registered trademark of Bluetooth SIG. A typical Bluetooth system will preferably operate in Class 2 or Class 3 mode and include adaptive frequency hopping (AFH) to effectively suppress interference. Alternatively, a WiFi, ultra wide band radio link or any other short range wireless technology may be utilized. Additionally, any radio frequency proprietary protocol specifically developed for this purpose or adapted from similar data transmission installations may be utilized. The system may utilize radio frequency identification (RFID) tags in a poll and response operating system, especially for switches such as the switches in the gear selector assembly 46 or neutral or reverse switches in the transmission 16. Such switches, when pooled, will read their RFID tag and whether the switch is on (active) off (deactivated) or unknown, indicating a fault or malfunction. This operating configuration, can, of course, be expanded to include switches having multiple (i.e., two, three, four or more) active states. As disclosed below with reference to Figure 3, this configuration is especially advantageous when the switch and transmitter are powered locally and the radio signal is, for example transmitted to the first transceiver assembly 60.

The signals provided by the first transmitter 62 of the first transceiver assembly 60 from the master controller 20 relate to the selection of shifts achieved by the splitter, the main gear box and the planetary gear assembly through control of the actuator and shift rail assemblies 82, 84, 86 and 88 as well as command a full or partial engagement and disengagement of the master friction clutch 14 by commands provided to the master friction clutch operator assembly 24 from the second transceiver assembly 70.

Referring now to Figure 3, a second embodiment automated mechanical transmission and wireless interface assembly is illustrated and designated by the reference number 110, The assembly 110 is similar in many respects to the first embodiment illustrated in Figure 1. As such, it includes a prime mover 12, a master clutch 14, a multiple speed, gear change transmission 16, a shift actuator assembly 18, a master controller 20, an engine controller 22 linked to the master controller 20, a master friction clutch operator assembly 24, and a throttle or accelerator pedal 28. The assembly 110 also includes a rear driveline assembly 30 including a rear prop shaft 32, a conventional rear differential 34, a pair of axles 36, left and right tire and wheel assemblies 38 and suitable universal joints 42 disposed on the rear prop shaft 32. An operator adjustable gear selector assembly 46 defines a shift pattern 48 that facilitates manual and automatic operation of the transmission assembly 16. A stationary front axle 50 pivotally supports a pair of front tire and wheel assemblies 52 which are coupled to a steering linkage 54 and vents to a steering wheel 56.

As noted, the assembly 110 is generally similar to the first embodiment assembly 10 illustrated in Figures 1 and 2 except that a larger number of transceivers or radio frequency links are utilized to transmit and receive additional data, information and control or command signals. For example, an anti-lock (ABS) system 112 having an ABS controller 114 is provided with signals from front speed sensors 116A and 116B and rear speed sensors 118A and 118B regarding the rotational speeds of the respective individual tire and wheel assemblies 52 and 38 in accordance with conventional practice. The speeds may be provided directly to the ABS control module 114 or may be provided through a bus 120 in accordance with established data transfer protocols and standards such as SAE J1939. A radio link assembly 122 which may be either a transmitter only or a transceiver which includes a transmitter and receiver is connected to the ABS control module 114 and provides data regarding, for example, wheel speeds as well as the current activity of the ABS controller 114 to the transceiver assembly 60 associated with the master controller 20.

A linear transducer and transmitter assembly 126 may be associated with the throttle or accelerator pedal 28. The transmitter assembly 126 provides data to the transceiver assembly 60 through a radio frequency link regarding the actual or real time position of the throttle pedal 28. A transmitter assembly 128 may also be associated with the shift assembly 46 to provide data regarding the manual control inputs from the operator of the vehicle such as operating mode, that is, whether the transmission 16 should operate in manual or automatic, the gear selected, such as neutral, forward, or reverse and a request for an upshift or downshift. The transmitter assembly 128 provides a radio frequency link to the transceiver 60. Alternatively, the transmitter 128 may be augmented with a receiver to receive data from the transceiver assembly 60 and the master controller 20 such as operating status indication or other indicator signals which are utilized to operate, for example, lights, digital readouts, buzzers or other audible warnings which may be located on the gear selector lever assembly 46 or elsewhere in the vehicle cab. Additionally, and as also illustrated in Figure 2, an input shaft speed sensor 102 may be coupled by a radio link such as a transmitter 134 to provide data to the transceiver assembly 60 regarding the input speed of the transmission assembly 18. Similarly, an output shaft speed sensor 136 may be utilized with a transmitter 138 to provide data to the transceiver assembly 60 and the master controller 20 regarding the output speed of the transmission 16. Finally, if desired, a separate receiver or transceiver assembly 140 may be utilized with the operator assembly 24 for the master friction clutch 14. As indicated in Figure 3, it is only necessary to provide such transmitters with electrical power in order to make them operate.

It will be appreciated that all of the radio frequency links may be and are utilized to avoid difficulties of electrical connection and continuity which often arise from the use of hard wiring, i.e., wire harnesses and connectors. Thus, when a sensor or actuator is located in an environmentally unfriendly location, i,e., exposed to ambient and road conditions, the use of a radio transmitter, radio receiver or radio transceiver in accordance with this invention disposed proximate a sensor or actuator is appropriate. The master controller 20 and associated transceiver 60 will, on the other hand, be located within the cab or other location in an environmentally friendly location and proximate a power source. While several transmitters and transceivers have been shown with various sensors to provide various data to the transceiver assembly 60 associated with the master controller 20, it will be appreciated that any data or information which may be necessary or may be utilized by the master controller 20 or other device may be transmitted to the transceiver assembly 60 or a similar component in the manner described to eliminate the hard wiring and connectors associated with prior designs and therefore improve the reliability of such systems. Similarly, any command or control signals to any operator or actuator generated by the controller 20 or other device may be transmitted by the transceiver assembly 60 or a similar component in the manner described to eliminate the need for wiring harnesses and connectors.

The foregoing disclosure is the best mode devised by the inventors for practicing this invention. It is apparent, however, that apparatus incorporating modifications and variations will be obvious to one skilled in the art of automated transmissions having wireless interfaces. Inasmuch as the foregoing disclosure is intended to enable one skilled in the pertinent art to practice the instant invention, it should not be construed to be limited thereby but should be construed to include such aforementioned obvious variations and be limited only by the spirit and scope of the following claims.

## Claims

1. An automated mechanical transmission assembly comprising, in combination:
a multiple speed transmission assembly having an input shaft, a plurality of selectable forward gear ratios and a plurality of actuators for selecting said selectable gear ratios;
a master friction clutch for selectively providing drive torque to said input shaft of said transmission, said clutch having an actuator;
a controller having a plurality of inputs and outputs for controlling said plurality of actuators and said clutch;
a first transmitter operatively coupled to said controller; and
a first receiver operatively coupled to said plurality of actuators
whereby said transmitter and said receiver provide a radio frequency link between said controller and said plurality actuators.

2. The automated mechanical transmission assembly of claim 1 further including at least one RFID tag associated with one of said plurality of actuators.

3. The automated mechanical transmission assembly of claim 1 further including a sensor associated with a gear selector assembly.

4. The automated mechanical transmission assembly of claim 1 further including a sensor associated with an ABS system of a vehicle.

5. The automated mechanical transmission assembly of claim 1 wherein said transceiver replaces a wire connection between said controller and said plurality of actuators.

6. The automated mechanical transmission assembly of claim 1 wherein said radio frequency link operates on a proprietary protocol.

7. The automated mechanical transmission assembly of claim 1 wherein said actuators include position sensors having outputs supplied to a second transmitter.

8. A mechanical transmission assembly comprising, in combination:
a multiple speed transmission assembly having an input shaft, a plurality of selectable forward gear ratios and a plurality of actuators for selecting said selectable gear ratios;
a controller having a plurality of inputs and outputs for controlling said plurality of actuators;
means for linking said controller and said plurality of actuators by radio frequency data transmission.

9. The mechanical transmission assembly of claim 8 further including at least one RFID tag associated with one of said plurality of actuators.

10. The mechanical transmission assembly of claim 8 further including a sensor associated with a gear selector assembly.

11. The mechanical transmission assembly of claim 8 further including a sensor associated with an ABS system of a vehicle.

12. The mechanical transmission assembly of claim 8 wherein said linking means replaces a wire connection between said controller and said plurality of actuators.

13. The mechanical transmission assembly of claim 8 wherein said actuators include position sensors having outputs supplied to said linking means.

14. The mechanical transmission assembly of claim 8 wherein said radio frequency means includes first and second radio frequency transceivers.

15. An mechanical transmission assembly comprising, in combination:
a multiple speed transmission assembly having an input shaft, a plurality of selectable forward gear ratios and a plurality of actuators for selecting said selectable gear ratios;
a controller having a plurality of inputs and outputs for controlling said plurality of actuators;
first transceiver operatively coupled to said controller; and
second transceiver operatively coupled to said plurality of actuators
whereby said first and said second transceiver provide a radio frequency link between said controller and said plurality actuators.

16. The mechanical transmission assembly of claim 15 further including at least one RFID tag associated with one of said plurality of actuators.

17. The mechanical transmission assembly of claim 15 further including a sensor associated with a gear selector assembly.

18. The mechanical transmission of claim 17 wherein said sensor includes an associated RFID tag.

19. The mechanical transmission assembly of claim 15 wherein said actuators include position sensors having outputs supplied to said second transceiver.

20. The mechanical transmission assembly of claim 14 further including a sensor associated with an ABS system of a vehicle.
